Europäisches Patentamt

(19) European Patent Office

Office européen des brevets

(11) Publication number: **0 002 239**
**A1**

## (12) EUROPEAN PATENT APPLICATION

(21) Application number: 78101450.1

(22) Date of filing: 24.11.78

(51) Int. Cl.²: **H 01 B 7/00**
**H 01 B 7/28, H 01 B 3/16**
**C 08 J 9/00, C 08 J 9/12**
**H 01 B 3/30**

(30) Priority: 25.11.77 JP 158700/77 U

(43) date of publication of application:
13.06.79 Bulletin 79/12

(84) Designated contracting states:
DE FR GB

(71) Applicant: NIPPONDENSO CO., LTD.
1, 1-chome Showa-cho
Kariya City Aichi Pref.(JP)

(72) Inventor: Miyamoto, Yoshimi
2-2, Gotanda Hanazonocho
Toyota-shi Aichi-ken(JP)

(72) Inventor: Kawai, Kazuhide
2, Takamicho-2-chome Chikusa-ku
Nagoya-shi Aichi-ken(JP)

(74) Representative: Zumstein sen., Fritz, Dr. et al,
Bräuhausstrasse 4
D-8000 München 2(DE)

(54) Flexible high tension cord for internal combustion engine.

(57) A flexible high tension cord for connecting an ignition coil, a distributor and spark plugs mounted on an internal combustion engine includes a medium layer (2) having many bubbles (2a) filled with insulating gases. Such bubbles are very effective to reduce the stray capacitance of the high tension cord without sacrificing breakdown voltage and flexibility of the cord.

EP 0 002 239 A1

- 1 -

NIPPONDENSO CO.,LTD., Kariya, Aichi-ken, Japan

FLEXIBLE HIGH TENSION CORD FOR
INTERNAL COMBUSTION ENGINE

BACKGROUND OF THE INVENTION
This invention relates to a high tension cord for
supplying high voltage electrical energy from an
ignition coil to a distributor and spark plugs
mounted on an internal combustion engine.

Generally, such a high tension cord is disposed in
an engine compartment and it is necessarily subject
to muddy water, or salt water in the cold weather
area where salt is scattered on roads to melt snow
or ice.

When muddy water or salt water is poured on the
conventional high tension cord, stray capacitance
between the central conductor of the high tension
cord and the ground may greatly increase lowering
generated voltage of the ignition coil.

## SUMMARY OF THE INVENTION

It is a main object of the present invention to provide a flexible high tension cord, the stray capacitance of which may not significantly increase even when muddy water or salt water is poured on the cord. In this connexion it is important to provide corona-free and long life high tension cord structure comprising an elongated conductor, a medium layer composed of insulating-gas-filled bubbles and a cover insulator of high voltage resistivity thereby reducing total permittivity of the high tension cord. Other objects and features of the present invention will be readily apparent from the following specification and drawing.

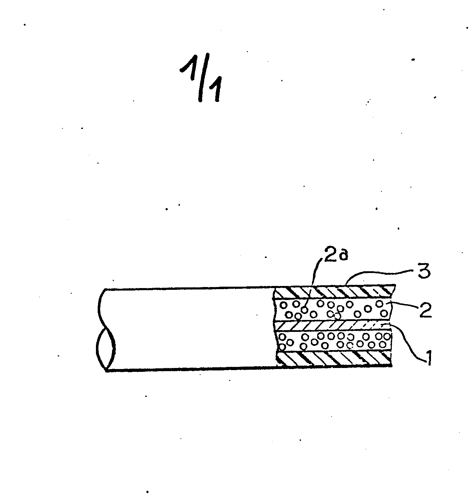

## DESCRIPTION OF THE DRAWING

The attached drawing is a longitudinal sectional view of a high tension cord structure according to the present invention.

## DETAILED DESCRIPTION OF A PREFERRED EMBODIMENT

Now, a preferred embodiment according to the present invention will be explained with reference to the attached drawing. In the drawing, a central conductor 1 preferably made of resistive material containing carbon for suppressing the generation of radio noises is covered by a medium layer 2 which contains a large number of bubbles 2a of sulphurfluoride (SF6) gas evenly distributed in 6-nylon or polyamide.6-nylon is one of good materials for keeping gases therein. Sulphurfluoride gas has
a high voltage resistivity, i.e. the breakdown
voltage thereof is 90 kV/10 mm, which is more
than three times as much as the resistivity of
the air. Sulphurfluoride gas is effective to
suppress the generation of a corona discharge.
However, the specific permittivity of sulphur-
fluoride gas is nearly equal to that of the air,
i.e. to 1. As the gas content ratio of the medium
layer is increased, the specific permittivity
of the layer becomes close to one. Since the gas
is contained in a large number of separate small
bubbles evenly distributed in the layer, it is very
easy to cut the layer to a suitable length without
releasing the gas therefrom. Seleniumfluoride gas
($SeF_6$) and sulphuroxide gas ($SO_2$) have also a high
voltage resistivity, a corona-suppressing effect
and a low specific permittivity, and they could be
substituted for sulphurfluoride gas. An external in-
sulator 3a of silicon rubber covers the outer surface of the medium layer 2 so as to ensure high
voltage endurance of the cord and protect the medium
layer from external injury.

The stray capacitance for the unit length of the
high tension cord according to the present invention
with muddy water or salt water thereon may be given
as follows:

$$C = \frac{2\pi\varepsilon_0}{\frac{1}{\varepsilon_1}\log\frac{r_2}{r_1} + \frac{1}{\varepsilon_2}\log\frac{r_3}{r_2}}$$

wherein $\varepsilon_0$ is the permittivity of a vacuum, i.e.
$8.855 \times 10^{-12}$ F/m,

$\varepsilon_1$ and $\varepsilon_2$ are respectively the specific permittivity of the medium layer 2 and the cover insulator 3,

$r_1$, $r_2$ and $r_3$ are respectively the radii of the central conductor 1, the medium layer 2 and the cover insulator.

If each value is given as follows:

$r_1$=0.75x10$^{-3}$m, $r_2$=2.25x10$^{-3}$m, $r_3$=5.00x10$^{-3}$m, $\varepsilon_1$=1 and $\varepsilon_2$=5.00, then C= 44 pF/m. In the above case, the breakdown voltage of the high tension cord is nearly equal to that of the cord solely having a cover insulator, which is 7 mm in diameter (i.e. $r_3$=5.5).

If the medium layer is replaced by the same material as the cover insulator, the stray capacitance becomes 147 pF/m, since the total permittivity of the high tension cord is increased due to the above replacement.

Further, if the medium layer is composed of air-filled bubbles, the outer diameter of the cover insulator should be increased so as to have the same breakdown voltage as $SF_6$ gas-filled bubbles. In this case, however, a corona discharge may take place causing deterioration of the insulating material.

According to the present invention, since the spaces of the bubbles are filled with high-voltage-insulating gas such as $SF_6$, the deterioration of the insulating material due to a corona discharge is effectively prevented by using a highly reliable high tension cord.

**Dr. F. Zumstein sen. - Dr. E. Assmann - Dr. R. Koenigsberger**
**Dipl.-Phys. R. Holzbauer - Dipl.-Ing. F. Klingseisen - Dr. F. Zumstein jun.**
PATENTANWÄLTE

8000 Munchen 2 · Bräuhausstraße 4 · Telefon Sammel-Nr. 22 53 41 · Telegramme Zumpat · Telex 5 29 979

- 1 -

Claims:

1. A high tension cord for an internal combustion
   engine, characterized by
   an elongated conductor,
   medium insulator including base material of less
   gas permeability disposed around said conductor
   and a plurality of separate bubbles filled with
   corona-resistive gas kept in said base material,
   said bubbles being evenly distributed in said
   base material, and
   a cover insulator coverin said medium insulator
   to ensure a high breakdown voltage.

2. A high tension cord according to claim 1,
   characterized by the fact that
   said base material is 6-nylon.

3. A high tension cord according to claim 1,
   characterized by the fact that
   said elongated conductor is a resistive material
   including carbon.

4. A high tension cord according to claim 1,
   characterized by the fact that

the corona-resistive gas is sulphurfluoride ($SF_6$).

5. A high tension cord according to claim 1,
   characterized by the fact that
   the corona-resistive gas is seleniumfluoride ($SeF_6$).

6. A high tension cord according to claim 1,
   characterized by the fact that
   the corona-resistive gas is sulphuroxide ($SO_2$).

1/1

| Category | Citation of document with indication, where appropriate, of relevant passages | Relevant to claim |
|---|---|---|
| | FR - A - 2 193 699 (BROWN BOVERIE & CIE)<br>* Claims 1,3,7 * | 1,4 |
| | FR - A - 2 194 022 (BROWN BOVERIE & CIE)<br>* Claims 1,5,4 * | 1,4 |
| | FR - A - 2 233 356 (BROWN BOVERIE & CIE)<br>* Claims 1,6,8 * | 1,4 |
| | DE - B - 1 166 310 (SIEMENS-SCHUCKERTWERKE A.G.)<br>* Claim 1 * | 1,2,3 |
| | CH - A - 523 135 (ITE IMPERIAL CORP.)<br>* Claims I,II; subclaim 8 * | 1,4 |
| A | FR - A - 1 471 936 (BADISCHE ANILIN & SODAFABRIK)<br>* Claim 1 * | 1,2 |
| A | FR - A - 1 564 336 (THE DOW CHEMICAL CO.)<br>* Claim 1 * | 1 |

**DOCUMENTS CONSIDERED TO BE RELEVANT**

CLASSIFICATION OF THE APPLICATION (Int. Cl.²)

H 01 B 7/00
        7/28
        3/16
C 08 J 9/00
        9/12
H 01 B 3/30

TECHNICAL FIELDS SEARCHED (Int.Cl.²)

H 01 B 7/00
        7/28
        3/16
C 08 J 9/00
        9/12
H 01 B 3/30

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-02-1979 | VITZTHUM VON ECKSTAEDT |

EPO Form 1503.1 06.78